(19) Europäisches Patentamt
European Patent Office
Office européen des brevets

(11) **EP 3 602 189 B1**

(12) **EUROPÄISCHE PATENTSCHRIFT**

(45) Veröffentlichungstag und Bekanntmachung des Hinweises auf die Patenterteilung:
**01.05.2024  Patentblatt 2024/18**

(21) Anmeldenummer: **18719882.5**

(22) Anmeldetag: **25.04.2018**

(51) Internationale Patentklassifikation (IPC):
***G02F 1/11*** (2006.01)

(52) Gemeinsame Patentklassifikation (CPC):
**G02F 1/113**

(86) Internationale Anmeldenummer:
**PCT/EP2018/060564**

(87) Internationale Veröffentlichungsnummer:
**WO 2018/197546 (01.11.2018 Gazette 2018/44)**

(54) **VERFAHREN UND SIGNALGENERATOR ZUM ANSTEUERN EINES AKUSTOOPTISCHEN ELEMENTS**

METHOD AND SIGNAL GENERATOR FOR CONTROLLING AN ACOUSTO-OPTIC ELEMENT

PROCÉDÉ ET GÉNÉRATEUR DE SIGNAL POUR COMMANDER UN ÉLÉMENT ACOUSTO-OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2017   DE 102017108854**

(43) Veröffentlichungstag der Anmeldung:
**05.02.2020   Patentblatt 2020/06**

(73) Patentinhaber: **Leica Microsystems CMS GmbH 35578 Wetzlar (DE)**

(72) Erfinder: **BIRK, Holger 74909 Meckesheim (DE)**

(74) Vertreter: **DehnsGermany Partnerschaft von Patentanwälten Postfach 33 04 29 80064 München (DE)**

(56) Entgegenhaltungen:
**WO-A1-2006/134169     WO-A1-2016/059157
US-A1- 2005 238 276    US-A1- 2006 269 185
US-A1- 2007 171 505    US-A1- 2008 247 031
US-A1- 2009 289 666    US-A1- 2011 304 900**

**Beschreibung**

Die vorliegende Erfindung betrifft ein Verfahren und einen Signalgenerator zum Ansteuern eines akustooptischen Elements, eine Anordnung aus einem solchen Signalgenerator und einem akustooptischen Element sowie ein Mikroskop mit einer solchen Anordnung.

Stand der Technik

Eine wesentliche Herausforderung in Bereichen der Mikroskopie ist, unabhängig vom eingesetzten Verfahren, die Bereitstellung von Anregungslicht mit einer oder mehreren vorgegebenen Wellenlängen. Je nach Art des Mikroskopieverfahrens und/oder nach Art der Probe können ein oder mehrere Anregungslichtstrahlen, welche in der Regel vorgegebene spektrale Eigenschaften aufweisen müssen, notwendig sein.

Beispielsweise ist es auf dem Gebiet der Fluoreszenzmikroskopie wichtig, Licht mit derjenigen Wellenlänge zu verwenden, die die Fluoreszenz anregt. Verschiedene Wellenlängen werden insbesondere dann gebraucht, wenn die Probe Fluoreszenzstoffe mit unterschiedlichen Anregungswellenlängen enthält.

Auf dem Gebiet der konfokalen Rastermikroskopie ist es von besonderem Interesse, die Intensitäten für bestimmte Wellenlängen anzupassen oder bestimmte Wellenlängen ein- oder auszuschalten.

Zu diesem Zweck können wellenlängenselektive Elemente zum Einsatz kommen, welche auf dem akustooptischen Effekt basieren. Derartige akustooptische Elemente weisen in der Regel einen sogenannten akustooptischen Kristall auf, welcher mittels eines akustischen Signalgebers, auch als Wandler oder "Transducer" bezeichnet, in Schwingung versetzt wird. In der Regel weist ein derartiger Wandler ein piezoelektrisches Material sowie zwei oder mehrere dieses Material kontaktierende Elektroden auf. Durch elektrisches Beschalten der Elektroden mit Hochfrequenzen (HF, auch: Radiofrequenzen, RF, radio frequencies), die typischerweise im Bereich zwischen 10 MHz und 10 GHz liegen, wird das piezoelektrische Material zum Schwingen angeregt, so dass eine akustische Welle entstehen kann, die den Kristall durchläuft. Akustooptische Kristalle zeichnen sich dadurch aus, dass die entstehende Schallwelle die optischen Eigenschaften des Kristalls verändert.

Beispiele für solche akustooptischen Elemente sind akustooptische abstimmbare Filter (AOTF), akustooptische Modulatoren (AOM), akustooptische Ablenker (AOD), akustooptische Strahlteiler (AOBS) und akustooptische Strahlvereiniger (AOBM).

Eine besondere Herausforderung bei der Verwendung von akustooptischen Elementen stellt deren Ansteuerung dar. Die hochfrequenten elektrischen Signale für den Wandler werden üblicherweise in einem Frequenzgenerator (beispielsweise ein spannungsgesteuerter Oszillator (englisch voltage-controlled oscillator, VCO), in einer Phasenregelschleife (englisch phase-locked loop, PLL), oder in einem Synthesizer nach dem DDS-Verfahren (direkte digitale Synthese (englisch direct digital synthesis)) erzeugt und mittels Hochfrequenzverstärkers so verstärkt, dass die Amplitude genügend groß ist, um den Kristall in Schwingung zu versetzen. Bei mehreren gleichzeitig angelegten, unterschiedlichen Ansteuerfrequenzen können Lichtstrahlen mehrerer Wellenlängen gleichzeitig (beispielsweise bei einem AOTF, AOBS, AOBM, AOM) beziehungsweise eine Wellenlänge eines einfallenden Lichtstrahls in mehrere Lichtstrahlen verschiedener Richtungen gleichzeitig (beispielsweise bei einem AOD) abgelenkt werden.

Zur Erzeugung eines Ansteuersignals mit mehreren Frequenzen können einzelne Frequenzgeneratoren, z.B. DDS-Synthesizer, welche je z.B. ein sinusförmiges Signal generieren, kombiniert werden, z.B. durch analoges Mischen der Ausgangssignale. Alternativ ist auch eine digitale Superposition möglich, wie z.B. in der WO 2011/154501 A1 gezeigt. Ein beispielhafter DDS-Synthesizer ist in Figur 1 dargestellt.

US 2005/238276 A1 offenbart eine ähnliche analoge Überlagerung der Signale mehrerer DDS-Komponenten in einem Combiner.

WO 2016/059157 A1 zeigt die Anwendung von verschiedenen Radiofrequenzsignalen auf Transducer, wobei die Signale in einem DDS-Synthesizer erzeugt werden, der ein Signal mit einer variablen Frequenz ausgibt.

US 2007/171505 A1 offenbart eine Frequenzerzeugung zur Ansteuerung eines AOTF. Dabei wird in einem DDS-Synthesizer ein Sinus- oder ein Kosinuswellensignal erzeugt.

US 2008/247031 A1 offenbart verschiedene DDS-Schaltkreise.

US 2009/289666 A1 offenbart einen DDS-Synthesizer zur Erzeugung von Frequenzsignalen für einen AOTF, deren Frequenz mit der Zeit geändert werden kann.

US 2006/269185 A1 offenbart eine Ansteuerung eines AOTF, wobei ein DDS ein Sinus- oder Kosinussignal ausgibt.

WO 2006/134169 A1 offenbart eine Ansteuerung eines AOTF mit mehreren Frequenzen, wobei zwei Signalpfade jeweils mit einer DDS-Einheit bearbeitet werden.

Die US 2011/0304900 A1 zeigt ein akustooptisches System, bei dem mehrere digitale Signale addiert werden, um ein digitales Signal mit mehreren Frequenzkomponenten zu erhalten, welches dann mittels eines Digitalanalogwandlers in ein analoges Signal gewandelt wird.

Bei mehreren gleichzeitig verwendeten Ansteuerfrequenzen ergeben sich aufgrund von Nichtlinearitäten in Verstärker, Transducer, Kristall oder anderweitigem Energieaustausch zwischen den Ansteuerfrequenzen immer auch Schwebungen beziehungsweise Intensitätsschwankungen, welche mit sämtlichen Differenz- und Summenfrequenzen auftreten können. Besonders störend sind dabei Modulationen des gebeugten Lichts aufgrund von (kleinen) Differenzfrequenzen, welche dann auch zu unerwünschten Modulationen des aus dem gebeugten Licht abgeleiteten Mess- bzw. Nutz-Signals führen können. Eine Folge sind beispielsweise Streifenmuster im Bild.

Ein zusätzliches Problem bei der Ansteuerung eines akustooptischen Elements folgt aus der temperaturabhängigen Schallgeschwindigkeit im akustooptischen Kristall. Wird die Kristalltemperatur nicht auf einem konstanten Wert gehalten oder werden die Frequenzen des Ansteuersignals nicht entsprechend nachgeführt, verschiebt sich das Beugungsmuster. Eine Frequenznachführung wird z.B. in der DE 10 2007 053 199 A1 behandelt. Jedoch gestaltet sich eine Frequenznachführung bei gemischten Signalen äußerst aufwendig, da sich die Differenz- und Summenfrequenzen verändern.

Es ist wünschenswert, akustooptische Elemente mit einer Überlagerung von mehreren Ansteuerfrequenzen zu betreiben. Dabei sollen unerwünschte Schwebungen der Intensität des gebeugten Lichts minimiert werden.

Offenbarung der Erfindung

Erfindungsgemäß werden ein Verfahren und einen Signalgenerator zum Ansteuern eines akustooptischen Elements, eine Anordnung aus einem solchen Signalgenerator und einem akustooptischen Element sowie ein Mikroskop mit einer solchen Anordnung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung basiert auf der Maßnahme, dass ein Ansteuersignal für das akustooptische Element mittels eines DDS-Verfahrens mit einer Signalwertfolge, die sich aus mindestens zwei Frequenzkomponenten zusammensetzt, erzeugt wird. Die Signalwertfolge beinhaltet somit bereits die erwünschte Frequenzkombination aus zwei oder mehr Frequenzen für das Ansteuersignal. Bei der apparativen Implementierung in einem Signalgenerator bzw. DDS-Synthesizer ist dann diese Signalwertfolge in einer Speichereinrichtung, beispielsweise in Form einer Tabelle, hinterlegt.

Vorteilhaft ist dabei, dass der Signalerzeugung nur eine Signalwertfolge zugrunde liegt, die auch die Differenzfrequenzen zwischen den Frequenzkomponenten festlegt. Um beispielsweise eine Temperaturnachführung durchzuführen, braucht nur das DDS-Phaseninkrement angepasst zu werden. Die Frequenzen werden automatisch gleichmäßig nachgeführt, wodurch auch die Differenzfrequenzen entsprechend nachgeführt werden.

Die Signalwertfolge setzt sich aus ganzzahligen Perioden jeder Frequenzkomponente zusammen. Beispielsweise könnte die Signalwertfolge die Überlagerung von drei Frequenzkomponenten sein, wobei 10 Perioden einer Komponente mit einer ersten Frequenz, 11 Perioden einer Komponente mit einer zweiten Frequenz und 12 Perioden einer Komponente mit einer dritten Frequenz überlagert sind. Dieses Beispiel ist selbstverständlich nicht beschränkend zu verstehen. Auch jede beliebige andere Kombination von Frequenzkomponenten ist möglich. Wichtig ist lediglich, dass ganzzahlige Perioden der verschiedenen Frequenzkomponenten überlagert sind. Wird nun in diesem Beispiel die Signalwertfolge mittels eines Phaseninkrements durchlaufen, so bleiben die Frequenzverhältnisse untereinander unabhängig von der tatsächlichen Größe des Phaseninkrements erhalten.

In einer vorteilhaften Ausführungsform setzt sich die Signalwertfolge aus wenigstens drei Frequenzkomponenten zusammen, von denen wenigstens ein Paar aus zwei Frequenzkomponenten den gleichen Frequenzabstand voneinander hat wie ein anderes Paar aus zwei Frequenzkomponenten. Dies erlaubt, Schwebungen auszulöschen, wie weiter unten noch erläutert wird. Setzt sich weiter vorzugsweise die Signalwertfolge aus einer ungeraden Anzahl von Frequenzen zusammen, ist eine Schwebungsauslöschung besonders einfach, da sich immer jeweils zwei Frequenzdifferenzen gegenseitig auslöschen können. Für diesen Fall hat idealerweise je eine gerade Anzahl, insbesondere zwei, von Paaren aus zwei Frequenzkomponenten den gleichen Frequenzabstand voneinander.

In einer weiteren vorteilhaften Ausführungsform wird die Phase wenigstens einer, vorzugsweise jeder der Frequenzkomponenten zu einem bestimmten Zeitpunkt vorgegeben, um ein Maximum in der Signalwertfolge zu verändern. Insbesondere ist der Zeitpunkt durch den ersten Signalwert charakterisiert, so dass die Phase auch als Startphase bezeichnet werden kann. Jede Veränderung einer Startphase [0° bis 360°] einer der Frequenzkomponenten führt in der Überlagerung zu einer anderen Signalwertfolge mit anderen Maxima und Minima. Vorteilhaft wird nun wenigstens eine Startphase so vorgegeben, dass der Maximalwert der Signalwertfolge möglichst klein bzw. minimal wird. Dies ist vorteilhaft, da umso weniger Nichtlinearitäten und Schwebungen beobachtet werden, je kleiner die Maximalwerte sind.

In einer weiteren vorteilhaften Ausführungsform wird ein Phaseninkrement zum Durchlaufen der Signalwertfolge abhängig von einer Temperatur eines Kristalls des akustooptischen Elements vorgegeben. Wie erläutert, führt eine Veränderung des Phaseninkrements zu einer Veränderung der Frequenzen im Ansteuersignal. Eine solche Temperaturnachführung der Frequenz lässt sich bei dem erfindungsgemäßen Verfahren besonders gut durchführen, da nur das Phaseninkrement angepasst werden muss, um sämtliche Frequenzkomponenten an die neuen Temperaturgegebenheiten anzupassen.

Bevorzugt werden die Frequenzkomponenten so vorgegeben, dass sich die Signalform nach einer Zeit kleiner gleich einem Schwellwert wiederholt. Dies ist vorteilhaft, da Schwebungseffekte keinen nachteiligen Effekt wie zum Beispiel ein Streifenmuster im Bild haben, wenn der Schwellwert klein genug ist.

Zweckmäßigerweise beträgt der Schwellwert 250 ns. Dies ist vorteilhaft, da bei einem Lichtstrahldurchmesser von z.B. 1 mm und einer Schallgeschwindigkeit von 4.000 m/s sich die gesamte Signalform nach spätestens 250 ns wiederholt. Der Lichtstrahl "sieht" also immer den kompletten, sich wiederholenden Gitterabschnitt.

Obwohl erfindungsgemäß einem Ansteuersignal bereits eine Signalwertfolge mit mehreren Frequenzkomponenten zugrunde liegt, kann dennoch zweckmäßig sein, mehrere solcher erfindungsgemäß erzeugter Ansteuersignal zu überlagen, insbesondere im Wege einer digitalen Superposition.

Prinzipiell ist es mit dem Konzept der digitalen Superposition mehrerer DDS-Ausgangssignale möglich, mehrere Frequenzen mit exakt bekannten Differenz- und Summenfrequenzen zu erzeugen. Alle Signalgeneratoren sollten dazu von demselben Taktgeber getrieben werden. Sollen insbesondere mehrere Frequenzen mit dem exakt gleichen Frequenzabstand realisiert werden, sollten die Phaseninkremente der einzelnen Ausgabefrequenzen denselben Abstand zueinander haben. Die gesamte Signalform wiederholt sich dabei nach der Zeit, die durch den größten gemeinsamen Teiler (ggT) der einzelnen Phaseninkremente gegeben ist.

Die Erfindung lässt sich besonders bevorzugt zur Einstellung, insbesondere Vergrößerung, einer Bandbreite des akustooptischen Elements und/oder zur Erzeugung mehrerer Beleuchtungspunkte aus einem das akustooptische Element beleuchtenden Beleuchtungslicht, wie weiter unten noch genauer erläutert wird, einsetzen. Die Position der Beleuchtungspunkte lässt sich dabei insbesondere durch das Phaseninkrement verändern.

Unter einer Bandbreite eines akustooptischen Elements (bei ein oder mehr vorgegebenen und an den Transducer des Kristalls angelegten Hochfrequenzen) hinsichtlich des Wellenlängenspektrums des eingestrahlten (breitbandigen) Lichts im Sinne der Erfindung ist die spektrale Breite des Wellenlängenteilbereiches des eingestrahlten Lichts zu verstehen, in dem das akustooptische Element dieses eingestrahlte Licht zu einem bestimmten festgesetzten Intensitätsanteil in die 1. Beugungsordnung beugt. Eine solche Definition der Breite kann beispielsweise basierend auf der Halbwertsbreite (FWHM) des sich ergebenen Intensitätsverlaufs des in die 1. Beugungsordnung gebeugten Lichts erfolgen. Im Wesentlichen entspricht der Intensitätsverlauf dem eines Bandpasses.

Die so gewonnene Bandbreite eines akustooptischen Elements variiert mit der oder den an den Transducer des Kristalls angelegten Hochfrequenzen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

Figurenbeschreibung

Figur 1    zeigt eine schematische Darstellung eines DDS- Synthesizers mit einer Signalform mit mehreren Frequenzkomponenten gemäß einer bevorzugten Ausführungsform der Erfindung.

Figur 2a    zeigt eine Signalform mit mehreren Frequenzkomponenten gemäß einer bevorzugten Ausführungsform der Erfindung.

Figur 2b    zeigt eine Signalform mit mehreren Frequenzkomponenten gemäß einer bevorzugten Ausführungsform der Erfindung mit angepasster Phasenbeziehung.

Figur 3    zeigt je eine Signalform mit mehreren Frequenzkomponenten gemäß einer bevorzugten Ausführungsform der Erfindung mit und ohne angepasste Phasenbeziehung.

Figur 4    zeigt eine Übersicht über die typischen Elemente eines konfokalen Mikroskops in schematischer Ansicht.

Detaillierte Beschreibung der Zeichnung

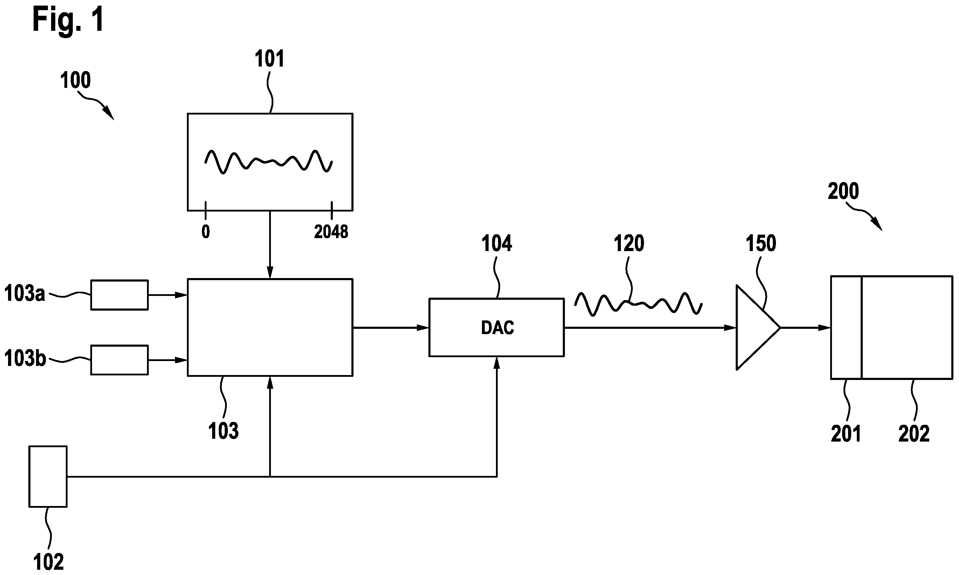

Figur 1 zeigt schematisch einen als DDS-Synthesizer 100 gemäß einer bevorzugten Ausführungsform der Erfindung ausgebildeten Signalgenerator.

Der DDS-Synthesizer 100 dient zur Ansteuerung eines akustooptischen Kristalls 202 eines akustooptischen Elements 200. Das akustooptische Element 200 weist außerdem einen piezoelektrischen Wandler 201 zur Versetzung des Kristalls 202 in mechanische Schwingungen auf.

Dem DDS-Synthesizer 100 ist insbesondere ein, insbesondere verstellbarer, Verstärker 150 nachgeschaltet, der dazu dient, ein von dem DDS-Synthesizer 100 ausgegebenes analoges Ausgangssignal 120 zu verstärken.

Der DDS-Synthesizer 100 weist eine Speichereinrichtung 101 auf, in der eine Signalwertfolge, beispielsweise in Form einer Liste oder Tabelle mit Signalwerten, abgelegt ist. Die Signalwertfolge weist eine Anzahl von Signalwerten (d.h. Zahlenwerte), z.B. in Form von Intensitätswerten, auf, welche die auszugebende Signalform des Ausgangssignals 120 beschreibt. Beispielsweise kann die Signalwertfolge 2048 Signalwerte umfassen, die zusammen eine Periode der auszugebenden Signalform bilden. Gemäß der dargestellten bevorzugten Ausführungsform der Erfindung setzt sich die Signalwertfolge aus zwei Frequenzkomponenten zusammen. Im vorliegenden Beispiel handelt es sich um die Überlagerung von zwei Sinusschwingungen mit beispielsweise einem Frequenzverhältnis von 5:6.

Weiterhin weist der DDS-Synthesizer 100 einen Taktgeber 102 auf, der ein Taktsignal mit einer festen Frequenz, im Beispiel 500 MHz, zur Verfügung stellt. Mit diesem Taktsignal werden ein Interpolator 103 und ein Digital/AnalogWandler (DAC) 104 getrieben. Das Taktsignal ist zweckmäßigerweise auf einen maximalen Takt des DAC 104 abgestimmt bzw. überschreitet diese zumindest nicht.

Dem Interpolator 103 werden ein Phaseninkrement 103a und ein Phasenraum 103b bereitgestellt.

Der Phasenraum 103b umfasst eine Anzahl von Phasenwerten (hier beispielsweise $2^{36}$), welche einen Adressraum der auszugebenden Werte definieren. Die Anzahl der Phasenwerte sollte zweckmäßigerweise ein Vielfaches der Anzahl der Signalwerte betragen, wobei dieses Vielfache die maximale Frequenzauflösung des Ausgangssignals definiert.

Das Phaseninkrement wird vom Interpolator 103 verwendet, um einen Phasenzählwert nach Maßgabe des Taktes jeweils zu erhöhen. Beträgt das Phaseninkrement wie im vorliegenden Beispiel $2^{32}$, wird der Phasenraum mit $2^{36}$ Phasenwerten in $2^4 = 16$ Schritten durchlaufen.

Der Interpolator 103 ermittelt zu jedem Schritt einen Signalwert, im vorliegenden Beispiel jeden 2048/16=128ten, und übergibt diesen an den DAC 104. Wenn notwendig, kann der Interpolator 103 den zu übergebenden Signalwert auch durch Interpolation aus den gespeicherten Signalwerten bestimmen.

Der DAC 104 gibt den jeweiligen Signalwert nach Maßgabe des Taktes aus und erzeugt auf diese Weise das analoge Ausgangssignal 120.

Die Frequenz $f$ des Ausgangssignal 120 ergibt sich als Produkt der Ausgabefrequenz $f_{DAC}$ des DAC 104 mit dem Quotienten aus Phaseninkrement [103a] und Phasenraumgröße [103b],

$$f = \frac{f_{DAC} \cdot [103a]}{[103b]}$$

d.h. im vorliegenden Beispiel zu 500 MHz * ($2^{32}/2^{36}$) = 500 MHz/16.

Nach Maßgabe der vorliegenden Erfindung setzt sich, wie erläutert, die gespeicherte Signalwertfolge aus mehreren Frequenzkomponenten zusammen. Beispielsweise könnte die Signalwertfolge eine Überlagerung von drei Frequenzen enthalten, so dass 10 Perioden einer ersten Frequenz, 11 Perioden einer zweiten Frequenz und 12 Perioden einer dritten Frequenz überlagert sind. Wird nun die Signalwertfolge mittels des Phaseninkrements 103a durchlaufen, so werden drei Frequenzen gleichzeitig ausgegeben.

Wird nun aufgrund von Temperaturschwankungen eine Anpassung der Frequenzen bzw. des Phaseninkrements erforderlich, so bleiben die "idealen" Frequenzverhältnisse weiter bestehen und die gesamte Kurvenform wiederholt sich wieder nach einem Durchlauf der Signalwertfolge, wobei dann genau die 10 Perioden der ersten Frequenzkomponente, 11 Perioden der zweiten Frequenzkomponente und 12 Perioden der dritten Frequenzkomponente durchlaufen wurden.

Eine maximale Schwebungs-Periodendauer T ergibt sich dann zu

$$T = \frac{[103b]}{f_{DAC} \cdot [103a]}.$$

Somit erhält man für alle Werte des Phaseninkrements einen Wert T, der sich aus den Frequenzverhältnissen der Signalwertfolge ergibt. Gegebenenfalls muss die Größe der Signalwertfolge und auch des Phasenraums im Vergleich zu einer Sinus-Signalwertfolge vergrößert werden, um eine erwünschte zeitliche Auflösung zu erhalten. Das Phaseninkrement ist in diesem Fall anzupassen, da bei einem kompletten Durchlauf der DDS-Tabelle jetzt ja mehrere Perioden ausgegeben werden.

Sollen beispielsweise drei Frequenzen im Verhältnis 10 / 11 / 12 ausgegeben werden (der Einfachheit halber 10 MHz, 11 MHz und 12 MHz), würde man bei einem herkömmlichen Aufbau mit drei separaten DDS-Synthesizern folgende Parameter wählen:

Phaseninkrement1 = 1374389530
Frequenz1 = 9,9999999656574800610542297363281e+6
Phaseninkrement2 = 1511828483
Frequenz2 = 1,0999999962223228067159652709961e+7
Phaseninkrement3 = 1649267436
Frequenz3 = 1,1999999958788976073265075683594e+7)

Sollen jetzt, z.B. aufgrund einer Temperaturänderung, alle Frequenzen gleichmäßig erhöht werden, so ist die nächste mögliche Kombination:

Phaseninkrement1 = 1374389540
Frequenz1 = 1,0000000003841705620288848876953e+ 7
Phaseninkrement2 = 1511828494

Frequenz2 = 1,100000004225876182317733764648e+7
Phaseninkrement3 = 1649267448
Frequenz3 = 1,200000004610046744346618652343e+7

Möchte man außerdem die Phasenbeziehung während der kontinuierlichen DAC-Ausgabe beibehalten, so muss die Änderung aller Phaseninkremente gleichzeitig, d.h. in einem Zeitraum $1/f_{DAC}$ erfolgen.

Im Vergleich dazu muss bei einer gewünschten Frequenzänderung im Rahmen der Erfindung lediglich ein Phaseninkrement geändert werden.

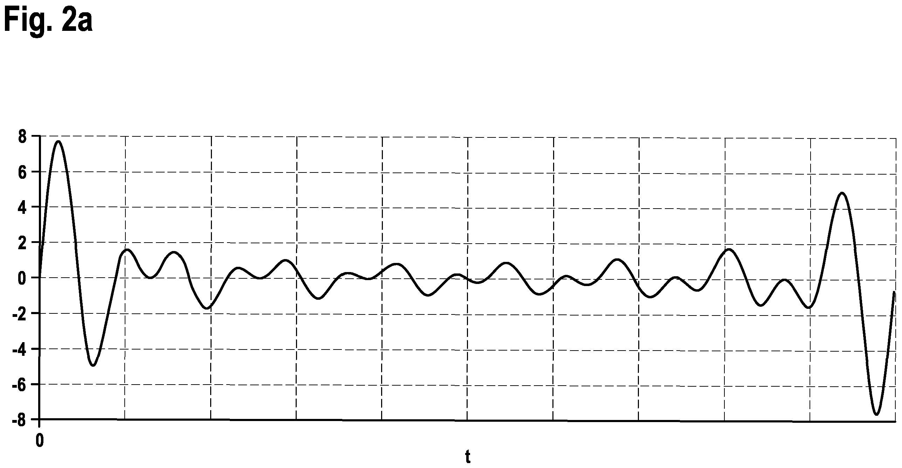

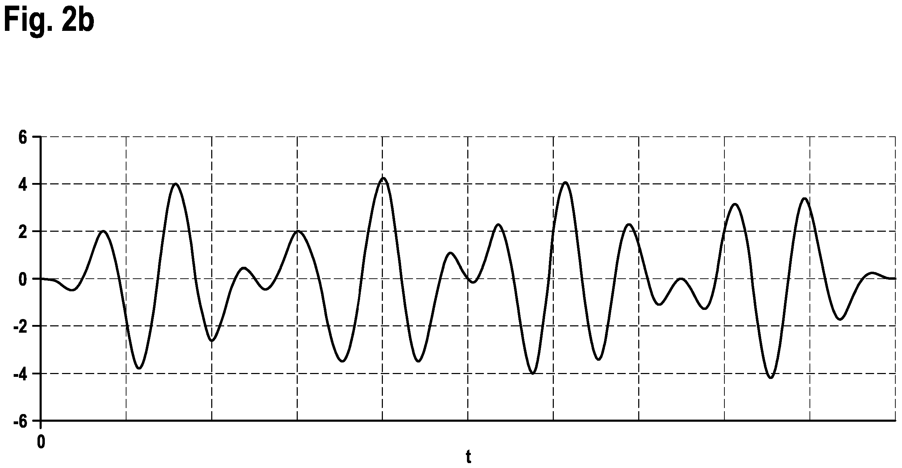

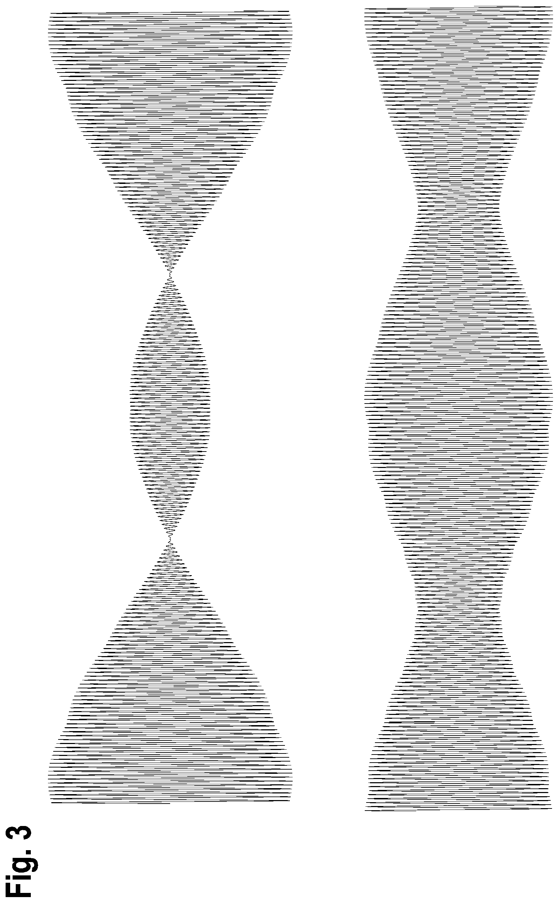

Während sich dieses einfache Beispiel - wenn auch mit Schwierigkeiten - mit einer Anordnung mit separaten DDS- Synthesizern noch darstellen lässt, so ist dies bei komplexeren Kurvenformen, wie in den Figuren 2 und 3 gezeigt, nahezu unmöglich zu realisieren. Um eine beliebige Kurvenform beizubehalten und während der DAC-Ausgabe die Frequenz zu ändern, müssten bei separaten DDS-Synthesizern sämtliche vorkommenden Frequenzkomponenten analysiert (z.B. mittels FFT) und dann sämtliche Phaseninkremente entsprechend der erlaubten Schrittweiten in $1/f_{DAC}$ neu gesetzt werden. Die Anzahl der notwendigen DDS-Synthesizer entspricht in einem solchen nicht erfindungsgemäßen Fall der Anzahl der Frequenzkomponenten.

Die erfindungsgemäße Lösung hingegen benötigt auch hierfür nur einen neuen Wert des Phaseninkrements.

In einer Weiterbildung der Erfindung, die nun anhand der Figuren 2a, 2b und 3 erläutert wird, wird die Phasenlage der einzelnen Frequenzkomponenten bevorzugt so vorgegeben bzw. optimiert, dass die maximal auftretenden Signalwerte möglichst klein sind. Je kleiner die Maximalwerte, desto weniger Nichtlinearitäten und Schwebungen werden beobachtet.

In Fig. 2a ist ein Signal gezeigt, welches sich aus acht Frequenzen von 40 MHz bis 75 MHz mit identischem Frequenzabstand 5 MHz, jeweils mit gleicher Amplitude mit Wert 1 zusammensetzt. Zum Zeitpunkt Null beginnen alle Frequenzkomponenten mit einem Sinus ohne Phasenverschiebung. Daraus ergibt sich eine maximale Amplitude, welche unwesentlich kleiner als die Summe der Einzelamplituden ist (in diesem Beispiel knapp unter 8).

Im Gegensatz dazu wurden gemäß Figur 2b geeignete Phasenverschiebungen zwischen den Frequenzen zum Zeitpunkt 0 vorgegeben, sog. Startphasen. Die Frequenzkomponente mit 40 MHz startet zum Zeitpunkt 0 mit einer Phasenverschiebung von 0°, 45 MHz mit 270°, 50 MHz mit 90° (d.h. als KosinusSignal), 55 MHz mit 180° Grad, 60 MHz mit 180°, 65 MHz mit 90°, 70 MHz mit 270° und 75 MHz mit 0°.

Obwohl das Signal aus den gleichen Frequenzkomponenten und mit den gleichen Amplituden wie in Figur 2a zusammengesetzt ist, wird hier die maximale Auslenkung kaum größer als 4. Wenn man davon ausgeht, dass Nichtlinearitäten die Schwebungen verursachen, so trägt die Optimierung der Startphasen deutlich zur Reduzierung der Schwebungen bei.

Nur beispielhaft seien im Folgenden zwei Anwendungsmöglichkeiten für die vorliegende Erfindung genannt.

## Anwendung 1: Erzeugung von mehreren Beleuchtungspunkten (Multispots).

Zur Erzeugung von mehreren Beleuchtungspunkten und/oder Fokalregionen in einem Beleuchtungsstrahlengang eines Mikroskops kann ein Ansteuersignal 120 mit mehreren Frequenzkomponenten an einen AOD als akustooptisches Element 200, an dem das Beleuchtungslicht gebrochen wird, angelegt werden. Beispielsweise kann sich das Ansteuersignal aus acht Frequenzkomponenten von 40 MHz bis 75 MHz mit identischem Frequenzabstand 5 MHz zusammensetzen.

Durch die Definition einer Signalwertfolge mit allen entsprechenden Frequenzen bleiben die Beugungsintensitäten des Lichts für alle acht Spots zeitlich konstant. Eine Veränderung des Phaseninkrements führt zu einer gleichmäßigen Spreizung aller acht Strahlen, so dass entweder Temperatureffekte kompensiert werden können oder auch das Bildfeld oder der Zoomfaktor eingestellt werden können.

## Anwendung 2: Bandbreitenvergrößerung beim Weißlichtlaser.

Bei einem AOTF als akustooptisches Element 200 ist die Bandbreite bei sinusförmiger Ansteuerung durch die Kristallgeometrie und die Größe des piezoelektrischen Wandlers 201 gegeben. Der spektrale Verlauf der Beugungseffizienz wird im Wesentlichen durch eine Sinc-Funktion beschrieben. Wird nun eine 2te Frequenz angelegt, welche innerhalb oder nahe der Bandbreite liegt, sollte man erwarten, dass sich die Bandbreite entsprechend einer zweiten, spektral etwas verschobenen Sinc-Funktion dadurch vergrößert. Bei Beleuchtung mit weißem Licht wird dann ein größerer Anteil des Spektrums gebeugt. Ein derartiges Verfahren ist in der Anmeldung DE 10 2014 009 142 A1 beschrieben. Dort wird allerdings nicht darauf eingegangen, dass eine zweite angelegte Frequenz innerhalb der Bandbreite zu besonders störenden Schwebungseffekten führt. Unterscheiden sich die beiden Frequenzen um beispielsweise weniger als 1 MHz, so liegt die Schwebungsdauer über 1 μs. Das ist aber eine typische Aufnahmedauer eines Bildpunktes. D.h. bei der einfachen Überlagerung zweier dicht benachbarter Frequenzen ist die Schwebung auf jeden Fall deutlich sichtbar.

Ein Lösungsansatz besteht jetzt darin, eine ungerade Anzahl von Frequenzen, z.B. drei, so zu überlagern, dass je eine gerade Anzahl (vorzugsweise zwei) von Paaren aus zwei Frequenzen den gleichen Frequenzabstand voneinander haben. Durch geeignete Wahl der Startphasen kann dann erreicht werden, dass die aus der Differenz von Frequenz_1 und Frequenz_2 entstehende Schwebung gegenphasig zu der aus der Differenz von Frequenz_2 und Frequenz_3 entstehenden Schwebung läuft und sich die beiden Schwebungen kompensieren. Auch hier ist die Kombination aller Frequenzen in einer einzigen Signalwertfolge essentiell, um auch bei Frequenzverschiebungen die Frequenz- und Phasenverhältnisse beizubehalten.

Ein weiterer Lösungsansatz besteht darin, sich nahezu beliebige Bandbreiten des AOTFs durch geeignete, komplexere Anregungssignale zu generieren. Grundsätzlich sind sämtliche möglichen Signalformen durch eine Linearkombination von Sinussignalen geeigneter Frequenz und Phasenlage darstellbar. Besonders erstrebenswert ist beim AOTF ein rechteckförmiges Transmissionsverhalten. Ein Ansatz, um dies zu erreichen, ist beispielsweise das Produkt einer Sinus-Schwingung mit einer Sinc-Funktion. Es ist aber darauf zu achten, dass periodische Randbedingungen für die Signalwertfolge erfüllt sind, d.h. die Signalform sollte sich ohne Sprung oder Knick fortsetzen lassen.

Ist die zum Erreichen eines gewünschten Bandbreitenprofils notwendige Signalform gefunden, kann diese durch einfaches Ändern eines Phaseninkrements auf verschiedene Wellenlängenbereiche verschoben werden.

Ein weiteres Beispiel einer Überlagerung von drei Frequenzen, wie sie für die Anwendung 2 relevant sein könnte, ist in Figur 3 gezeigt. Hier sind drei Frequenzen im Verhältnis 100 / 100,5 / 101 überlagert. Im oberen Bild liegt die Startphase der mittleren Frequenz bei 0° und im unteren Bild liegt sie bei 90°. Auch hier sieht man deutlich den Effekt der Startphase auf die maximale Amplitude. Bei dem unteren Bild ist die maximale Amplitude deutlich geringer.

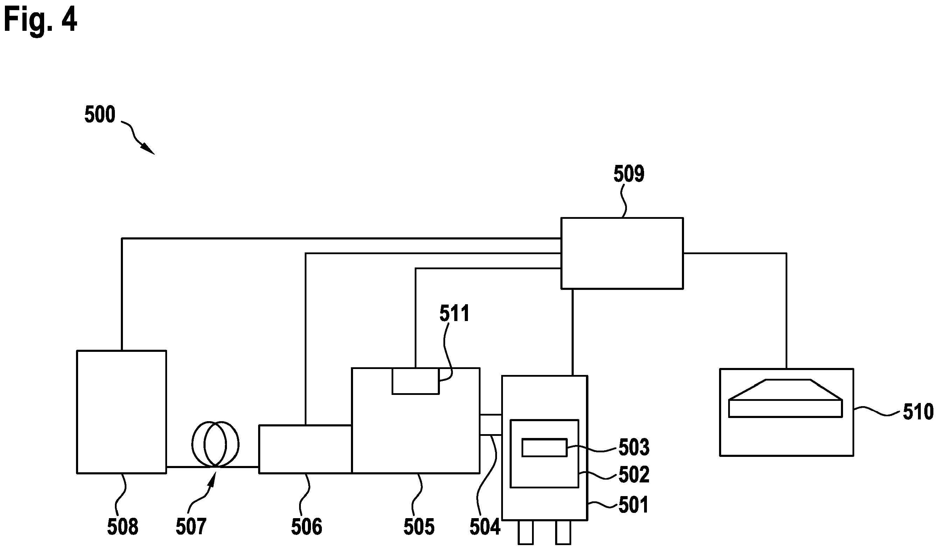

Figur 4 zeigt schematisch ein beispielhaftes Konfokalmikroskop mit typischen Komponenten. 500 bezeichnet das Gesamtsystem. Die konfokale Raster- und Detektionseinheit ist mit 505 bezeichnet. Die dazugehörige Beleuchtungseinrichtung ist mit 506 bezeichnet. In der Beleuchtungseinrichtung ist eine Anordnung gemäß Figur 1 vorgesehen. Es ist ebenso möglich, dass die Beleuchtungseinrichtung 506 nicht direkt mit der Raster- und Detektionseinheit 505 verbunden ist, sondern über eine Lichtleitfaser (nicht gezeigt).

Bei 508 handelt es sich um eine Laserlichtquelle, die über eine Lichtleitfaser 507 mit der Beleuchtungseinrichtung 506 verbunden ist. Alternativ kann die Laserlichtquelle 508 auch direkt mit der Beleuchtungseinrichtung 506 verbunden sein. Das Laserlicht wird in der Beleuchtungseinrichtung 506 gewünschtenfalls mittels eines akustooptischen Elements beeinflusst.

504 bezeichnet einen optischen Adapter für die konfokale Raster- und Detektionseinheit 505 am Mikroskopstativ 501. Innerhalb des Stativs 501 befindet sich der Objekttisch 502 mit einer zu untersuchenden Probe 503. Eine Steuereinheit 509 steht über entsprechende Verbindungsleitungen mit den einzelnen Komponenten 508, 506, 505 und 501 in Verbindung. Ein Rechner mit Steuer- und Darstellungsprogrammen ist mit 510 bezeichnet; auch er steht mit der Steuereinheit 509 in Verbindung.

Innerhalb der konfokalen Raster- und Detektionseinheit 505 ist in einer ersten Variante ein klassischer konfokaler Strahlengang angeordnet, der in bekannter Weise mit einem einzelnen Pinhole und einem Strahlscanner, beispielsweise einem Spiegelscanner, aufgebaut ist.

In einer zweiten Variante befindet sich innerhalb der konfokalen Raster- und Detektionseinheit 505 ein Strahlengang, bei dem die Probe gleichzeitig mit einem oder mehreren oder in einer Richtung ausgedehnten Beleuchtungspunkten beleuchtet wird. Entsprechend werden die zu detektierenden Photonen beispielsweise mit einer geometrischen Anordnung von Lochblenden (Pinholes) selektiert.

Die zu untersuchende Probe 503 wird über eine Mikroskopoptik beleuchtet, sowie über dieselbe Mikroskopoptik insbesondere auf eine Sensoranordnung 511 abgebildet, die je nach Ausführungsform der konfokalen Raster- und Detektionseinheit 505 aus einem Photomultiplier oder einem Array von Photomultipliern besteht. Die Funktionsweise eines in Figur 4 dargestellten Systems 500 ist an sich hinlänglich bekannt und soll daher vorliegend nicht erläutert werden.

Bezugszeichenliste

| 100 | Signalgenerator |
|---|---|
| 101 | Speichereinrichtung |
| 102 | Taktgeber |
| 103 | Interpolator |
| 103a | Phaseninkrement |
| 103b | Phasenraum |
| 104 | Digital/Analog-Wandler (DAC) |
| 120 | Ausgangssignal |
| 150 | Verstärker |
| 200 | akustooptisches Element |
| 201 | piezoelektrischer Wandler (Transducer) |
| 202 | akustooptischer Kristall |
| 500 | Mikroskopsystem |
| 501 | Mikroskopstativ mit Mikroskopoptik |
| 502 | Objekttisch |
| 503 | Probe |
| 504 | optischer Adapter |
| 505 | konfokale Raster- und Detektionseinheit |
| 506 | Beleuchtungseinrichtung |
| 507 | Beleuchtungsfaser |
| 508 | Laserlichtquelle |
| 509 | Steuereinheit |

510    Rechner mit Steuer- und Darstellungsprogrammen

511    Sensoranordnung

**Patentansprüche**

1.    Verfahren zum Ansteuern eines akustooptischen Elements (200) mit einem Ansteuersignal (120), das mittels eines DDS-Verfahrens mit einer Signalwertfolge, die sich aus mindestens zwei Frequenzkomponenten zusammensetzt, erzeugt wird, wobei sich die Signalwertfolge aus ganzzahligen Perioden jeder Frequenzkomponente zusammensetzt.

2.    Verfahren nach Anspruch 1, wobei sich die Signalwertfolge aus wenigstens drei Frequenzkomponenten zusammensetzt, von denen wenigstens ein Paar aus zwei Frequenzkomponenten den gleichen Frequenzabstand voneinander hat wie ein anderes Paar aus zwei Frequenzkomponenten.

3.    Verfahren nach Anspruch 2, wobei je eine gerade Anzahl von Paaren aus zwei Frequenzkomponenten den gleichen Frequenzabstand voneinander hat.

4.    Verfahren nach einem der vorstehenden Ansprüche, wobei sich die Signalwertfolge aus einer ungeraden Anzahl von Frequenzkomponenten zusammensetzt.

5.    Verfahren nach einem der vorstehenden Ansprüche, wobei eine Phase wenigstens einer der Frequenzkomponenten zu einem bestimmten Zeitpunkt vorgegeben wird, um ein Maximum in der Signalwertfolge zu verändern.

6.    Verfahren nach einem der vorstehenden Ansprüche, wobei ein Phaseninkrement (103a) zum Durchlaufen der Signalwertfolge abhängig von einer Temperatur eines Kristalls (202) des akustooptischen Elements (200) vorgegeben wird.

7.    Verfahren nach einem der vorstehenden Ansprüche, wobei die Frequenzkomponenten so vorgegeben werden, dass sich die Signalform nach einer Zeit kleiner gleich einem Schwellwert wiederholt.

8.    Verfahren nach Anspruch 7, wobei der Schwellwert 250 ns beträgt.

9.    Verfahren nach einem der vorstehenden Ansprüche, wobei eine Bandbreite des akustooptischen Elements (200) eingestellt wird.

10.    Verfahren nach einem der vorstehenden Ansprüche, wobei aus einem das akustooptische Element (200) beleuchtenden Beleuchtungslicht mehrere Beleuchtungspunkte erzeugt werden.

11.    Verfahren nach Anspruch 10, wobei ein Phaseninkrement (103a) zum Durchlaufen der Signalwertfolge zum Vorgeben der Positionen der Beleuchtungspunkte vorgegeben wird.

12.    Signalgenerator (100) zum Ansteuern eines akustooptischen Elements (200), der dazu eingerichtet ist, ein Verfahren nach einem der vorstehenden Ansprüche durchzuführen.

13.    Anordnung aus wenigstens einem Signalgenerator (100) nach einem der vorstehenden Ansprüche und einem akustooptischen Element (200).

14.    Anordnung nach Anspruch 13, wobei das akustooptische Element (200) ausgewählt ist aus einem akustooptisch abstimmbaren Filter, einem akustooptischen Modulator, einem akustooptischen Ablenker, einem akustooptischen Strahlteiler und einem akustooptischen Strahlvereiniger.

15.    Mikroskop (500) mit einer Anordnung nach Anspruch 13 oder 14.

**Claims**

1.    Method for driving an acousto-optical element (200) with a drive signal (120) which is generated by means of a DDS method with a signal value sequence which is composed of at least two frequency components, wherein the signal value sequence is composed of integer periods of each frequency component.

2.    Method according to claim 1, wherein the signal value sequence is composed of at least three frequency components, of which at least one pair of two frequency components has the same frequency spacing from each other as another pair of two frequency components.

3.    Method according to claim 2, wherein an even number of pairs of two frequency components each have the same frequency spacing from each other.

4.    Method according to any of the preceding claims, wherein the signal value sequence is composed of an odd number of frequency components.

5.    Method according to any of the preceding claims, wherein a phase of at least one of the frequency components is predetermined at a certain time to change a maximum in the signal value sequence.

6.    Method according to any one of the preceding claims, wherein a phase increment (103a) for passing through the signal value sequence is predetermined depending on a temperature of a crystal (202) of the acousto-optic element (200).

7. Method according to any one of the preceding claims, wherein the frequency components are predetermined such that the waveform repeats after a time less than or equal to a threshold value.

8. Method according to claim 7, wherein the threshold value is 250 ns.

9. Method according to any one of the preceding claims, wherein a bandwidth of the acousto-optic element (200) is adjusted.

10. Method according to any one of the preceding claims, wherein a plurality of illumination points are generated from an illumination light illuminating the acousto-optic element (200).

11. Method according to claim 10, wherein a phase increment (103a) is predetermined for passing through the signal value sequence for predetermining the positions of the illumination points.

12. Signal generator (100) for driving an acousto-optic element (200), adapted to perform a method according to any of the preceding claims.

13. Arrangement comprising at least one signal generator (100) according to one of the preceding claims and an acousto-optic element (200).

14. Arrangement according to claim 13, wherein the acousto-optic element (200) is selected from an acousto-optically tunable filter, an acousto-optic modulator, an acousto-optic deflector, an acousto-optic beam splitter and an acousto-optic beam combiner.

15. Microscope (500) comprising an arrangement according to claim 13 or 14.

**Revendications**

1. Procédé de commande d'un élément acousto-optique (200) avec un signal de commande (120) qui est généré au moyen d'un procédé DDS avec une séquence de valeurs de signal qui se compose d'au moins deux composantes de fréquence, la séquence de valeurs de signal se composant de périodes entières de chaque composante de fréquence.

2. Procédé selon la revendication 1, dans lequel la séquence de valeurs de signal se compose d'au moins trois composantes de fréquence, dont au moins une paire de deux composantes de fréquence a le même écart de fréquence entre elles qu'une autre paire de deux composantes de fréquence.

3. Procédé selon la revendication 2, dans lequel un nombre pair de paires de deux composantes de fréquence ont le même écart de fréquence entre elles.

4. Procédé selon l'une des revendications précédentes, dans lequel la séquence de valeurs de signal se compose d'un nombre impair de composantes de fréquence.

5. Procédé selon l'une quelconque des revendications précédentes, dans lequel une phase d'au moins l'une des composantes de fréquence est prédéterminée à un moment donné afin de modifier un maximum dans la séquence de valeurs de signal.

6. Procédé selon l'une des revendications précédentes, dans lequel un incrément de phase (103a) pour le passage de la séquence de valeurs de signal est prédéfini en fonction d'une température d'un cristal (202) de l'élément acousto-optique (200).

7. Procédé selon l'une des revendications précédentes, dans lequel les composantes de fréquence sont prédéterminées de telle sorte que la forme du signal se répète après un temps inférieur ou égal à une valeur de seuil.

8. Procédé selon la revendication 7, dans lequel la valeur seuil est de 250 ns.

9. Procédé selon l'une des revendications précédentes, dans lequel une largeur de bande de l'élément acousto-optique (200) est réglée.

10. Procédé selon l'une quelconque des revendications précédentes, dans lequel plusieurs points d'éclairage sont générés à partir d'une lumière d'éclairage éclairant l'élément acousto-optique (200).

11. Procédé selon la revendication 10, dans lequel un incrément de phase (103a) est prédéfini pour parcourir la séquence de valeurs de signal afin de prédéfinir les positions des points d'éclairage.

12. Générateur de signaux (100) pour la commande d'un élément acousto-optique (200), qui est adapté pour mettre en oeuvre un procédé selon l'une des revendications précédentes.

13. Dispositif constitué d'au moins un générateur de signaux (100) selon l'une des revendications précédentes et d'un élément acousto-optique (200).

14. Dispositif selon la revendication 13, dans lequel l'élément acousto-optique (200) est choisi parmi un filtre accordable acousto-optiquement, un modulateur acousto-optique, un déflecteur acousto-optique, un séparateur de faisceau acousto-optique et un combineur de faisceau acousto-optique.

15. Microscope (500) avec un dispositif selon la revendication 13 ou 14.

Fig. 1

## Fig. 2a

EP 3 602 189 B1

# Fig. 2b

EP 3 602 189 B1

Fig. 3

EP 3 602 189 B1

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011154501 A1
- US 2005238276 A1
- WO 2016059157 A1
- US 2007171505 A1
- US 2008247031 A1
- US 2009289666 A1

- US 2006269185 A1
- WO 2006134169 A1
- US 20110304900 A1
- DE 102007053199 A1
- DE 102014009142 A1